# EUROPÄISCHE PATENTSCHRIFT

(11) **EP 1 457 655 B1**
(45) Veröffentlichungstag und Bekanntmachung des Hinweises auf die Patenterteilung: **19.03.2008**
(21) Anmeldenummer: 03100588.7
(22) Anmeldetag: 10.03.2003
(51) Int. Cl.: F02D 41/40, F02D 41/02

(54) **Verfahren zur Unterstuetzung des Aufheizens eines Katalysators einer Brennkrafmaschine**
Method of engine operation to assist the heating of the catalyst
Procédé d'opération d'un moteur à combustion interne pour améliorer le chauffage d'un catalyseur

(43) Veröffentlichungstag der Anmeldung: 15.09.2004
(73) Patentinhaber: Ford Global Technologies, LLC, Dearborn, MI 48126 (US)
(72) Erfinder: Borrmann, Dirk, 50354, Huerth (DE); Eves, Brian David, SS16 5JR, Basildon (GB)
(74) Vertreter: Drömer, Hans-Carsten

(56) Entgegenhaltungen:
- EP-A- 0 943 793
- DE-A- 10 100 682
- DE-A- 10 114 050
- US-B1- 6 345 499

## Beschreibung

Die Erfindung betrifft ein Verfahren zur Unterstützung des Aufheizens eines Katalysators, welcher im Abgasweg einer Brennkraftmaschine mit Direkteinspritzung Funkenzündung und im Wesentlichen flach ausgebildeten Kolben angeordnet ist, wobei ein erster Kraftstoffanteil, der 70 % bis 90 % der gesamten Kraftstoffmenge beträgt, im Ansaugtakt und ein zweiter Kraftstoffanteil im Verdichtungstakt eingespritzt wird und eine verzögerte Zündung des Kraftstoffes erfolgt. Ferner betrifft die Erfindung eine zur Durchführung des Verfahrens eingerichtete Brennkraftmaschine.

Ein Grossteil der Emissionen einer Brennkraftmaschine entsteht, wenn während eines Kaltstarts der Katalysator noch nicht die erforderliche Betriebstemperatur erreicht hat. Um die zunehmend strengeren Emissionsvorschriften für Kraftfahrzeuge erfüllen zu können, ist daher eine möglichst schnelle Erwärmung eines Katalysators wünschenswert. Diesbezüglich offenbart die EP 943 793 A2 ein Verfahren zur raschen Aufheizung eines Katalysators, der im Abgasweg einer Brennkraftmaschine mit Direkteinspritzung und Funkenzündung angeordnet ist, wobei die Kolben der Brennkraftmaschine an ihrer Oberseite eine ausgeprägte muldenförmige Vertiefung aufweisen. Durch die Vertiefung wird eingespritzter Kraftstoff gezielt zur Zündkerze gelenkt, so dass sich dort lokal eine hohe Konzentration des Kraftstoffs einstellt. Ein erster Teil des Kraftstoffes wird während des Ansaugtaktes und der restliche Teil des Kraftstoffes während des anschließenden Verdichtungstaktes eingespritzt. Ein schnelles Aufheizen des Katalysators wird dadurch erreicht, dass nach Abschluss der Kraftstoffinjektionen das Gemisch im Vergleich zu einer normalen Verbrennung verzögert gezündet wird, so dass die Abgase beim Verlassen der Zylinder eine höhere Wärmemenge enthalten.

Die US 6,345,499 B1 offenbart ein Verfahren zum Betreiben eines Verbrennungsmotors, der mit einem Abgaskatalysator und mit Direkteinspritzung ausgerüstet ist. Bei niedriger Temperatur des Abgaskatalysators ist vorgesehen, zwei zeitlich versetzte Kraftstoffeinspritzungen vorzunehmen, um eine rasche Katalysatorerwärmung zu gewährleisten. Dabei wird eine erste Kraftstoffeinspritzung während eines Ansaugtakts vorgenommen, während eine zweite Kraftstoffeinspritzung während des Verdichtungstakts vorgenommen wird. Die zweite Kraftstoffeinspritzung findet nach Ablauf der Hälfte der Dauer des Verdichtungstakts bis zum Ablauf von 3/4 der der Dauer des Verdichtungstakts, aber nicht später statt. Zur Unterstützung der Katalysatorerwärmung ist eine Veränderung des Zündzeitpunkts in Abhängigkeit von der Belastung des Verbrennungsmotors vorgesehen, der Zündzeitpunkt wird dabei, insbesondere bei geringer Drehzahl und geringer Last, in Richtung oder bis hinter den oberen Totpunkt des jeweiligen Zylinders verschoben.

Die EP 0 943 793 A2 offenbart ein Verfahren zum Betreiben einer Brennkraftmaschine, bei dem während einer Anlaufphase der Brennkraftmaschine zur Erwärmung eines nachgeschalteten Katalysators eine erste Kraftstoffeinspritzung während eines Ansaugtakts und eine zweite Kraftstoffeinspritzung während eines Verdichtungstakts vorgenommen wird, um im Bereich einer Zündkerze ein angereichertes Kraftstoff-Luft-Gemisch und im übrigen Zylinderraum ein mageres Gemisch zu erzeugen. Weiterhin ist vorgesehen, die Zündung vorzunehmen, wenn sich das angereicherte Gemisch um die Zündkerze herum ausgebildet hat.

Vor diesem Hintergrund war es Aufgabe der vorliegenden Erfindung, ein verbessertes Verfahren zur Unterstützung des Aufheizens eines Katalysators bereitzustellen, das bei einer Brennkraftmaschine mit Direkteinspritzung und Funkenzündung sowie mit an der Oberseite im Wesentlichen flach ausgebildeten Kolben einsetzbar ist.

Diese Aufgabe wird durch ein Verfahren mit den Merkmalen des Anspruchs 1 sowie durch eine Brennkraftmaschine mit den Merkmalen des Anspruchs 5 gelöst.

Vorteilhafte Ausgestaltungen sind in den Unteransprüchen enthalten.

Das erfindungsgemäße Verfahren dient dem schnelleren Aufheizen eines Katalysators, welcher im Abgasweg einer Brennkraftmaschine mit Direkteinspritzung und Funkenzündung angeordnet ist. Bei dem Verfahren wird pro Arbeitszyklus eines Kolbens der Brennkraftmaschine ein erster Kraftstoffanteil im Ansaugtakt und ein zweiter Kraftstoffanteil im anschließenden Verdichtungstakt eingespritzt. Das Luft-Kraftstoff-Gemisch wird gegenüber einer herkömmlichen Verbrennung verzögert gezündet, so dass durch eine höhere Abgastemperatur der Katalysator schneller seine Betriebstemperatur erreicht und die von der Brennkraftmaschine kommenden Abgase von Schadstoffen reinigen kann. Erfindungsgemäß werden die Kraftstoffeinspritzung und der Zündzeitpunkt derart aufeinander abgestimmt, dass der Zündfunke in etwa dann auftritt, wenn die durch den zweiten Kraftstoffanteil angereicherte Mischung die Zündkerze erreicht.

Das beschriebene Verfahren wird bei Brennkraftmaschinen mit Direkteinspritzung und Funkenzündung eingesetzt, deren Kolben an der Oberseite nicht vertieft, sondern im Wesentlichen flach ausgebildet sind. Außer exakt ebenen Kolben gehören hierzu auch Kolben, die lediglich kleine Ausnehmungen zur Vermeidung von Ventilberührungen oder sehr flache Ausbuchtungen aufweisen, die typischerweise nur 2-5 mm tief und von einem ca. 20 mm geringeren Durchmesser als der Kolben sind. Eine derartige, im Wesentlichen flache Kolbenoberseite trägt nicht dazu bei, eingespritzten Kraftstoff in eine bestimmte Richtung zu lenken. Im Gegensatz hierzu haben die bei vielen Brennkraftmaschinen mit Direkteinspritzung und Funkenzündung verwendeten Kolben eine tiefe, ausgeprägte Mulde, welche sich typischerweise außermittig vom Kraftstoffinjektor bis zum Bereich der Zündeinrichtung erstreckt und durch welche eingespritzter Kraftstoff gezielt zur Zündeinrichtung gelenkt wird. Eine derartige, durch die Geometrie unterstützte Aufkonzentration des Kraftstoffs im Bereich der Zündeinrichtung findet bei den vorliegend betrachteten Kolben mit im Wesentlichen flacher Oberseite nicht statt.

Trotz dieses gravierenden Unterschiedes hinsichtlich der sich einstellenden Verbrennungsbedingungen ist es mit der vorgeschlagenen Aufteilung der Kraftstoffmengen auf die beiden Injektionen möglich, eine erhebliche Verzögerung der Zündung und damit eine Erhöhung der Abgastemperatur bei gleichzeitiger Stabilität des Motorlaufs zu erreichen. Da für die Zündung und schnelle Verbrennung eines Luft-Kraftstoff-Gemisches in einer Brennkammer eine ausreichende Kraftstoffkonzentration in der Umgebung der Zündeinrichtung ausschlaggebend ist, wäre theoretisch beim Übergang von einem Kolben mit einer Mulde zu einem flachen Kolben zu erwarten, daß der Anteil der zweiten Kraftstoffinjektion, welcher für inhomogene Verhältnisse in der Brennkammer sorgt, tendenziell zu erhöhen ist. Es zeigt sich jedoch, daß eine bessere Verbrennung im Gegenteil durch einen verhältnismäßig hohen Anteil von 70 % bis 90 % des zuerst eingespritzten Kraftstoffes, der sich homogen in der Brennkammer verteilt, erreicht wird.
Der im Ansaugtakt zugeführte erste Kraftstoffanteil kann prinzipiell zu jedem Zeitpunkt nach Schließen der Auslaßventile eingespritzt werden. Vorzugsweise wird er in einem Intervall zwischen ca. 330° und ca. 250° des Kurbelwellenwinkels vor dem oberen Totpunkt des Kolbens eingespritzt. Der im Verdichtungstakt zugeführte zweite Kraftstoffanteil wird vorzugsweise zwischen ca. 60° und ca. 20° des Kurbelwellenwinkels vor dem oberen Totpunkt des Kolbens ei ngespritzt. Es zeigt sich, daß bei derartigen Werten eine maximale Zündverzögerung bei gleichzeitig stabilem Motorlauf möglich ist.

Die Erfindung betrifft ferner eine Brennkraftmaschine mit einem im Abgasweg angeordneten Katalysator. Die Brennkraftmaschine weist mindestens einen Zylinder auf, welcher wiederum einen an der Oberseite im Wesentlichen flach ausgebildeten Kolben, einen Kraftstoffinjektor zur Direkteinspritzung von Kraftstoff, und eine Zündeinrichtung zur Funkenzündung des Kraftstoffes aufweist. Ein Motorregler ist mit dem Kraftstoffinjektor und der Zündeinrichtung sowie gegebenenfalls weiteren Aktuatoren und/oder geeigneten Sensoren verbunden, um die Zeitpunkte und anteiligen Mengen von Kraftstoffinjektionen sowie die Zeitpunkte der Zündung zu steuern. Der Motorregler ist dadurch gekennzeichnet, daß dieser zur Durchführung eines Verfahrens der vorstehend erläuterten Art ausgebildet ist. D.h., daß der Motorregler den Kraftstoffinjektor so ansteuern kann, daß ein erster Kraftstoffanteil von ca. 70 % bis ca. 90 % der gesamten Kraftstoffmenge im Ansaugtakt und ein zweiter Kraftstoffanteil im Verdichtungstakt eingespritzt wird, und daß nach der Injektion eine verzögerte Zündung stattfindet.

Im Folgenden wird die Erfindung mit Hilfe der Figuren beispielhaft erläutert. Es zeigen:
- Fig. 1: schematisch einen Schnitt durch den Zylinder einer Brennkraftmaschine mit einer erfindungsgemäßen Motorregelung, und
- Fig. 2: die Zeitpunkte und Mengenanteile der Kraftstoffinjektionen in einem zyklischen Diagramm des Kurbelwellenwinkels.

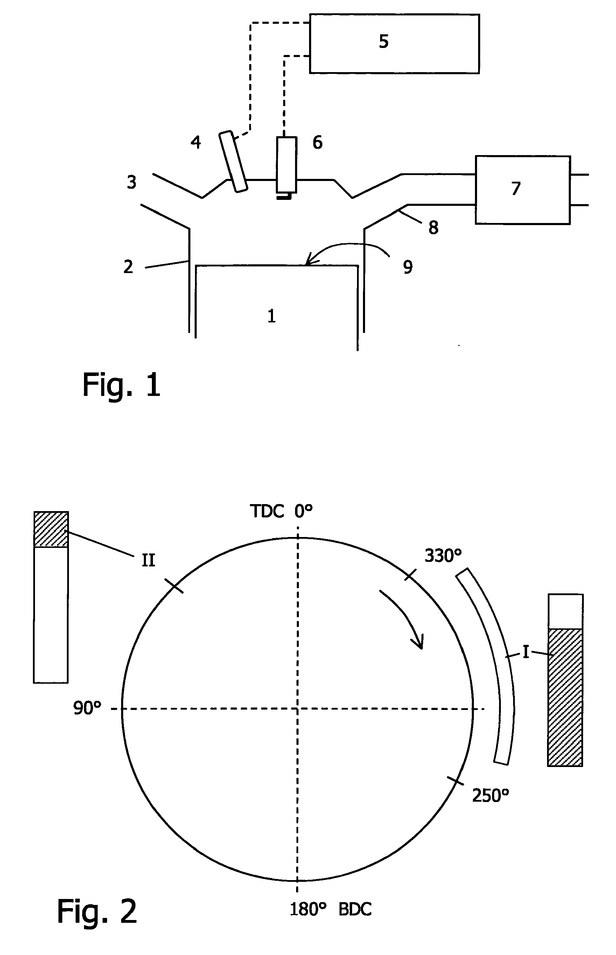

In Figur 1 ist schematisch ein Schnitt durch einen von mehreren Zylindern 2 einer Brennkraftmaschine dargestellt. In dem Zylinder 2 ist ein auf und ab beweglicher Kolben 1 mit einer im Wesentlichen flachen Oberseite 9 angeordnet. Der dachförmig ausgebildete Zylinderkopf weist einen Einlaß 3 für Luft, einen Auslaß 8 für Abgas sowie einen Kraftstoffinjektor 4 und eine Zündkerze 6 auf. Typischerweise sind je zwei Einlaß- und zwei Auslaßventile (nicht dargestellt) vorgesehen, und die Zündkerze 6 ist im Wesentlichen mittig angeordnet. Ein Motorregler 5 ist mit dem Kraftstoffinjektor 4 und der Zündeinrichtung 6 gekoppelt, um den Zündzeitpunkt sowie die Zeitpunkte und Mengen der Kraftstoffinjektionen zu steuern.

Des Weiteren ist in Figur 1 ein im Abgasweg 8 angeordneter Katalysator 7 dargestellt. Beim Kaltstart des Motors ist es wichtig, daß der Katalysator 7 möglichst schnell seine Betriebstemperatur erreicht, damit dieser Schadstoffe aus dem Abgas entfernen kann. Durch eine Verzögerung des Zündzeitpunktes des Luft-Kraftstoff-Gemisches im Zylinder 2 während des Kaltstarts wird in diesem Zusammenhang eine erhöhte Abgastemperatur und damit eine schnellere Aufheizung des Katalysators 7 angestrebt, wobei die dem Katalysator 7 zugeführte Wärme im Wesentlichen proportional zur eingestellten Zündverzögerung ist. Die Zündverzögerung darf jedoch nicht so groß sein, daß hierdurch die Stabilität des Motorlaufs beeinträchtigt würde. Bei Brennkraftmaschinen mit einer Injektion im Ansaugkrümmer (PFI: port fuel injection) ist diesbezüglich eine Zündung bei ca. -10° bis -15° in Bezug auf den oberen Totpunkt des Kolbens erreichbar. Bei Brennkraftmaschinen mit Direkteinspritzung und Funkenzündung (DISI: direct injection spark ignition) und mit einer Mulde im Kolben zur Lenkung des Kraftstoffes zur Zündeinrichtung ist durch mehrfache Kraftstoffinjektionen ein stabiler Betrieb bis ca. -25° bis -30° in Bezug auf den oberen Totpunkt möglich, wobei in der Regel zwei Injektionen mit je 50 % des Kraftstoffes erfolgen. Die Mulde im Kolben konzentriert dabei den Kraftstoff der zweiten Injektion in der Umgebung der Zündei n-richtung, wodurch ein leicht entzündbarer, angereicherter Kern des Luft-Kraftstoff-Gemisches entsteht, über den sich eine Verbrennung schnell in den übrigen Brennraum ausbreitet. Durch diese rasche Verbrennung wird die starke Verzögerung des Zündzeitpunktes möglich.

Wie bereits erwähnt wurde, weist die vorliegend betrachtete Brennkraftmaschine Kolben 1 mit einer flachen Oberseite 9 auf, welche den Kraftstoff nicht in eine bevorzugte Richtung lenkt. Der Kraftstoff der zweiten Injektion läßt sich daher nicht durch die Geometrie der Brennkammer in der Nähe der Zündeinrichtung 6 konzentrieren.

Um gleichwohl eine maximale Verzögerung des Zündzeitpunktes und damit eine schnelle Aufheizung des Katalysators 7 erreichen zu können, wird der mit dem Kraftstoffinjektor 4 und der Zündeinrichtung 6 gekoppelte Motorregler 5 so eingerichtet beziehungsweise programmiert, daß mit der ersten Injektion ein Kraftstoffanteil von ca. 80% und mit der zweiten Injektion der restliche Kraftstoffanteil von ca. 20% eingespritzt wird.

Figur 2 zeigt diesbezüglich in einem zyklischen Diagramm des Kurbelwellenwinkels (Rotation der Kurbelwelle in Pfeilrichtung) bevorzugte Zeitintervalle für die erste Kraftstoffinjektion I und für die zweite Kraftstoffinjektion II sowie als Balkendiagramme die zugehörigen Mengenanteile des eingespritzten Kraftstoffs. Die Kraftstoffinjektion und der Zündzeitpunkt werden so aufeinander abgestimmt, daß der Zündfunke in etwa dann auftritt, wenn die durch die zweite Injektion angereicherte Mischung die Zündkerze erreicht. Wie in Figur 2 gezeigt, findet die erste Kraftstoffinjektion I während des Ansaugtaktes, der sich von 180° bis 360° erstreckt, nach dem Schließen der Auslaßventile statt. Typischerweise liegt die erste Kraftstoffinjektion I zwischen 330° und 250° vor dem oberen Totpunkt TDC des Kolbens. Die zweite Kraftstoffinjektion II findet während des Verdichtungstaktes, der sich von 180° bis 0° vor dem oberen Totpunkt TDC erstreckt, statt. Typischerweise erfolgt sie bei Werten zwischen 60° und 20° vor dem oberen Totpunkt TDC.

Des Weiteren ist in den Balkendiagrammen von Figur 2 angedeutet, daß die erste Injektion I einen größeren Anteil von ca. 80% und die zweite Injektion II den restlichen Anteil von ca. 20% der gesamten Kraftstoffmenge umfaßt, wodurch trotz der flachen Oberseite 9 des Kolbens 1 eine stabile Verbrennung möglich wird.

## Patentansprüche

1. Verfahren zur Unterstützung des Aufheizens eines Katalysators (7), welcher im Abgasweg (8) einer Brennkraftmaschine mit Direkteinspritzung, Funkenzündung und im Wesentlichen flach ausgebildeten Kolben (1) angeordnet ist, wobei ein erster Kraftstoffanteil, der 70 % bis 90 % der gesamten Kraftstoffmenge beträgt, im Ansaugtakt und ein zweiter Kraftstoffanteil im Verdichtungstakt eingespritzt wird und eine verzögerte Zündung des Kraftstoffes erfolgt, **dadurch gekennzeichnet, dass**, die Kraftstoffeinspritzung und der Zündzeitpunkt derart aufeinander abgestimmt werden, dass der Zündfunke in etwa dann auftritt, wenn die durch den zweiten Kraftstoffanteil angereicherte Mischung die Zündkerze erreicht.

2. Verfahren nach Anspruch 1,
**dadurch gekennzeichnet, daß**
der erste Kraftstoffanteil ca. 80 % der gesamten Kraftstoffmenge beträgt.

3. Verfahren nach Anspruch 1 oder 2,
**dadurch gekennzeichnet, daß**
der erste Kraftstoffanteil zwischen ca. 330° und ca. 250° des Kurbelwellenwinkels vor dem oberen Totpunkt (TDC) des Kolbens eingespritzt wird.

4. Verfahren nach mindestens einem der Ansprüche 1 bis 3,
**dadurch gekennzeichnet, daß**
der zweite Kraftstoffanteil zwischen ca. 60° und ca. 20° des Kurbelwellenwinkels vor dem oberen Totpunkt (TDC) des Kolbens eingespritzt wird.

5. Brennkraftmaschine, enthaltend
a) mindestens einen Zylinder (2) mit einem an der Oberseite (9) im Wesentlichen flach ausgebildeten Kolben (1), einem Kraftstoffinjektor (4) zur Direkteinspritzung von Kraftstoff, und einer Zündeinrichtung (6);
b) einen im Abgasweg (8) angeordneten Katalysator (7);
c) einen Motorregler (5) zur Steuerung der Zündzeitpunkte sowie der Zeitpunkte und Mengen der Kraftstoffinjektion;
**dadurch gekennzeichnet, daß**
der Motorregler dahingehend ausgebildet ist, ein Verfahren nach mindestens einem der Ansprüche 1 bis 4 auszuführen.

## Claims

1. Method for assisting the heating of a catalytic converter (7) which is arranged in the exhaust-gas path (8) of an internal combustion engine with direct injection, spark ignition and pistons (1) which are of substantially flat design, with a first fuel proportion, which is 70% to 90% of the total fuel quantity, being injected in the intake stroke, and a second fuel proportion being injected in the compression stroke, and a retarded ignition of the fuel taking place,
**characterized in that**
the fuel injection and the ignition time are coordinated with one another in such a way that the ignition spark takes place approximately when the mixture which is enriched by the second fuel proportion reaches the spark plug.

2. Method according to Claim 1,
**characterized in that**
the first fuel proportion is approximately 80% of the total fuel quantity.

3. Method according to Claim 1 or 2,
**characterized in that**
the first fuel proportion is injected between approximately 330° and approximately 250° crank angle before top dead centre (TDC) of the piston.

4. Method according to at least one of Claims 1 to 3,
**characterized in that**
the second fuel proportion is injected between approximately 60° and approximately 20° crank angle before top dead centre (TDC) of the piston.

5. Internal combustion engine, comprising
a) at least one cylinder (2) with a piston (1) which is of substantially flat design on the upper side (9), with a fuel injector (4) for the direct injection of fuel, and with an ignition device (6);
b) a catalytic converter (7) arranged in the exhaust-gas path (8);
c) an engine controller (5) for controlling the ignition times and the times and quantities of the fuel injection;
**characterized in that**
the engine controller is designed to carry out a method according to at least one of Claims 1 to 4.

## Revendications

1. Procédé pour favoriser le chauffage d'un catalyseur (7), qui est disposé dans la voie de gaz d'échappement (8) d'un moteur à combustion interne à injection directe, allumage par étincelle et piston essentiellement plat (1), une première proportion de carburant, qui représente de 70 % à 90 % de la quantité totale de carburant, étant injectée pendant le temps d'admission et une deuxième proportion de carburant étant injectée pendant le temps de compression, et un allumage retardé du carburant étant prévu, **caractérisé en ce que** l'injection de carburant et l'instant d'allumage sont adaptés l'un à l'autre de telle sorte que l'étincelle d'allumage se produise approximativement lorsque le mélange enrichi par la deuxième proportion de carburant atteint la bougie d'allumage.

2. Procédé selon la revendication 1,
**caractérisé en ce que**
la première proportion de carburant représente environ 80 % de la quantité de carburant totale.

3. Procédé selon la revendication 1 ou 2,
**caractérisé en ce que**
la première proportion de carburant est injectée entre environ 330° et environ 250° d'angle de vilebrequin avant le point mort haut (TDC) du piston.

4. Procédé selon au moins l'une quelconque des revendications 1 à 3,
**caractérisé en ce que**
la deuxième proportion de carburant est injectée entre environ 60° et environ 20° d'angle de vilebrequin avant le point mort haut (TDC) du piston.

5. Moteur à combustion interne, comprenant :
a) au moins un cylindre (2) avec un piston (1) essentiellement plat sur le côté supérieur (9), un injecteur de carburant (4) pour l'injection directe de carburant, et un dispositif d'allumage (6) ;
b) un catalyseur (7) disposé dans la voie de gaz d'échappement (8) ;
c) un régulateur de moteur (5) pour la commande des instants d'allumage ainsi que des instants et des quantités d'injection de carburant ;
**caractérisé en ce que**
le régulateur de moteur est réalisé de manière à mettre en oeuvre un procédé selon au moins l'une quelconque des revendications 1 à 4.
